# EUROPÄISCHE PATENTANMELDUNG

(11) **EP 4 789 857 A1**
(43) Veröffentlichungstag der Anmeldung: **12.08.2026**
(21) Anmeldenummer: 25156869.7
(22) Anmeldetag: 10.02.2025
(51) Int. Cl.: B29D 99/00, B29C 70/52, B29C 70/54

(54) **ABREISSGEWEBE, PULTRUDIERTER FASERVERBUNDSTREIFEN UND HERSTELLUNG EINES PULTRUDIERTEN FASERVERBUNDSTREIFENS**

(71) Anmelder: Wobben Properties GmbH, 26607 Aurich (DE)
(72) Erfinder: Bärtl, Christina, 26603 Aurich (DE)
(74) Vertreter: Eisenführ Speiser

(57) **Zusammenfassung**

Die Erfindung betrifft ein Abreißgewebe (50) zum Erzeugen einer Oberflächenstruktur eines pultrudierten Faserverbundstreifens (283). Ferner betrifft die Erfindung ein Verfahren (300) zum Herstellen eines pultrudierten Faserverbundstreifens, einen pultrudierten Faserverbundstreifen und einen Gurt (281, 282) für ein Rotorblatt (200) einer Windenergieanlage (100). Das Abreißgewebe (50) weist Kettfäden (51) mit einem Kettfadendurchmesser (d1) und Schussfäden (52) mit einem Schussfadendurchmesser (d2) auf. Das Abreißgewebe (50) weist ferner mindestens einen Harzkanalbildungsfaden (53) mit einem Harzkanalbildungsfadendurchmesser (d3) auf, wobei der Harzkanalbildungsfadendurchmesser (d3) größer, vorzugsweise um ein Vielfaches größer, ist als der Kettfadendurchmesser (d1) und der größer, vorzugsweise um ein Vielfaches größer, ist als der Schussfadendurchmesser (d2). Mittels eines solchen Abreißgewebes wird ein pultrudierter Faserverbundstreifen hergestellt, der eine Oberfläche (283o) aufweist, die mittels Abreißen eines solchen Abreißgewebes (50) erzeugt wurde, wobei der Faserverbundstreifen (283) mindestens einen Harzkanal (10) aufweist, der sich entlang der Oberfläche (283o) des Faserverbundstreifens (283) erstreckt.

## Beschreibung

Die Erfindung betrifft ein Abreißgewebe, insbesondere zum Erzeugen einer Oberflächenstruktur eines pultrudierten Faserverbundstreifens. Ferner betrifft die Erfindung ein Verfahren zum Herstellen eines pultrudierten Faserverbundstreifens, einen pultrudierten Faserverbundstreifen und einen Gurt, insbesondere für ein Rotorblatt einer Windenergieanlage.

Rotorblätter für Windenergieanlagen werden typischerweise aus mehreren Bauteilen zusammengebaut. So weisen Rotorblätter in der Regel zwei Rotorblatthalbschalen auf, wobei entlang jeder der Rotorblatthalbschalen in Längsrichtung jeweils mindestens ein Gurt verläuft. An den Rändern der Rotorblatthalbschalen sind diese typischerweise miteinander verklebt. Die Gurte sind im Innenraum des Rotorblattes und sich gegenüberliegend angeordnet. Die Gurte sind ferner in der Regel mit einem Steg miteinander verbunden. Es sind allerdings auch andere Aufbauten von Rotorblättern bekannt.

Es ist bekannt, pultrudierte Faserverbundstreifen, die auch als Pultrudate bezeichnet werden können, für die Herstellung von Gurten von Rotorblättern für Windenergieanlagen zu verwenden. Pultrudierte Faserverbundstreifen sind im Pultrusionsverfahren, das auch als Strangziehverfahren bezeichnet werden kann, hergestellte Faserverbund-Bauteile, insbesondere Faser-Kunststoff-Verbund-Bauteile. Pultrudierte Faserverbundstreifen bieten den Vorteil, dass diese schnell, einfach und kostengünstig hergestellt werden können. Wenn pultrudierte Faserverbundwerkstoffe in einem Gurt eines Rotorblattes verwendet werden, werden diese typischerweise in eine Form gelegt und, gegebenenfalls mit weiteren Bauteilen oder Bestandteilen, in einem Harzinfusionsverfahren mit Harz umgeben, wodurch die pultrudierten Faserverbundwerkstoffe zu einem Faserverbundbauteil miteinander verbunden werden.

Gurte für die Rotorblätter können vorab in separaten Formen hergestellt werden. Anschließend können solche separat hergestellten Gurte dann in einem zweiten Schritt mit den Rotorblatthalbschalen, und gegebenenfalls Stegen, verbunden werden. Es ist allerdings auch möglich, die Gurte und Rotorblatthalbschalen in einem gemeinsamen Herstellungsschritt, insbesondere in einem gemeinsamen Harzinfusionsprozess, herzustellen.

Es ist bekannt, beim Herstellen von pultrudierten Faserverbundsteifen mittels eines Pultrusionsverfahrens ein Abreißgewebe auf eine Außenoberfläche des pultrudierten Faserverbundstreifens aufzubringen. Ein solches Abreißgewebe wird dann von der Außenoberfläche abgezogen, d.h. abgerissen. Dadurch kann eine saubere, also nicht verunreinigte Außenoberfläche erzeugt werden, die, bedingt durch die Gewebestruktur des Abreißgewebes, eine strukturierte Oberfläche ausbildet, sodass die Außenoberfläche eine gewisse Rauigkeit aufweist. Eine solche Außenoberfläche mit einer strukturierten Oberfläche kann in der Regel besser mittels Harz und/oder Klebstoff mit anderen Bauteilen verbunden werden als eine glattere Oberfläche.

Es ist ferner bekannt, Zwischenlagen, insbesondere in Form von Fasergeweben und/oder Fasergelegen und/oder Vliesstoffen, wie Wirrfaser-Vliesstoffen, zwischen nebeneinander angeordneten pultrudierten Faserverbundstreifen anzuordnen. Solche Zwischenlagen können auch direkt an den pultrudierten Faserverbundstreifen angebracht sein. Das Vorsehen von Zwischenlagen dient insbesondere dazu, eine Fließhilfe bereitzustellen, also eine ausreichende Fließfähigkeit für Harz zu erzeugen, sodass Harz in einem Infusionsprozess zwischen den pultrudierten Faserverbundstreifen entlang der Zwischenlagen fließen kann. Um die Fließfähigkeit des Harzes zu verbessern, werden typischerweise relativ lockere Fasergelege und/oder Fasergewebe eingesetzt, damit möglichst viel Raum zwischen den Fasern für den Harzfluss vorhanden ist.

Ein Nachteil besteht bei diesem bekannten Vorgehen darin, dass relativ harzreiche Bereiche zwischen den pultrudierten Faserverbundstreifen im Bereich der Zwischenlagen entstehen. Solche unerwünschten harzreichen Bereiche können sich negativ auf die mechanischen Eigenschaften des hergestellten Bauteils auswirken.

Der Erfindung liegt daher die Aufgabe zugrunde, eine verbesserte Lösung bereitzustellen, welche die genannten Probleme adressiert. Insbesondere ist es Aufgabe der Erfindung, eine Lösung bereitzustellen, mit der die mechanischen Eigenschaften eines Faserverbundbauteils mit mehreren pultrudierten Faserverbundstreifen verbessert werden können.

Gemäß einem ersten Aspekt wird die Aufgabe gelöst durch ein Abreißgewebe mit den Merkmalen des Anspruchs 1. Demnach ist ein Abreißgewebe, insbesondere zum Erzeugen einer Oberflächenstruktur eines pultrudierten Faserverbundstreifens, vorgesehen. Das Abreißgewebe weist Kettfäden mit einem Kettfadendurchmesser und Schussfäden mit einem Schussfadendurchmesser auf. Das Abreißgewebe weist ferner mindestens einen Harzkanalbildungsfaden mit einem Harzkanalbildungsfadendurchmesser auf. Der Harzkanalbildungsfadendurchmesser ist größer, vorzugsweise um ein Vielfaches größer, als der Kettfadendurchmesser. Der Harzkanalbildungsfadendurchmesser ist ferner größer, vorzugsweise um ein Vielfaches größer, als der Schussfadendurchmesser.

Unter einem Abreißgewebe ist insbesondere ein, vorzugsweise feinmaschiges, Gewebe zu verstehen. Das Abreißgewebe ist vorzugsweise nicht mit einem Trennmittel beschichtet. Das Abreißgewebe ist also vorzugsweise trennmittelfrei. Es ist zwar auch möglich, das Abreißgewebe mit einer Trennmittelbeschichtung zu versehen. Allerdings ist es besonders vorteilhaft, wenn das Abreißgewebe nicht mit Trennmittel beschichtet ist, da bei der Verwendung von Trennmitteln an dem Abreißgewebe Rückstände vom Trennmittel nach dem Abreißen auf dem Bauteil, insbesondere auf dem pultrudierten Faserverbundstreifen, verbleiben können, die dann einen unerwünschten Trenneffekt bewirken können und somit ein Verkleben der Bauteile, insbesondere auf dem pultrudierten Faserverbundstreifen, erschweren können.

Die Kettfäden des Abreißgewebes sind vorzugsweise Kunststofffäden, besonders bevorzugt Polyamidfäden, auch Nylonfäden genannt. Die Kettfäden verlaufen in der Ebene des Abreißgewebes vorzugsweise gerade und/oder parallel zueinander. Die Schussfäden des Abreißgewebes sind vorzugsweise Kunststofffäden, besonders bevorzugt Polyamidfäden, auch Nylonfäden genannt. Die Schussfäden verlaufen in der Ebene des Abreißgewebes vorzugsweise gerade und/oder parallel zueinander.

Die Kettfäden und die Schussfäden bilden vorzugsweise ein Gewebe, besonders bevorzugt ein Leinwandgewebe. Vorzugsweise verlaufen die Kettfäden und die Schussfäden nicht parallel zueinander. Vorzugsweise verlaufen die Kettfäden und die Schussfäden orthogonal zueinander. Der Kettfadendurchmesser und der Schussfadendurchmesser sind vorzugsweise gleich groß. Es ist besonders bevorzugt, dass die Kettfäden und Schussfäden orthogonal zueinander ausgerichtet sind.

Der mindestens eine Harzkanalbildungsfaden ist größer als der Kettfadendurchmesser und größer als der Schussfadendurchmesser. Der mindestens eine Harzkanalbildungsfaden ist vorzugsweise nicht mit einem Trennmittel beschichtet. Der Harzkanalbildungsfaden ist also vorzugsweise trennmittelfrei. Dadurch kann auf vorteilhafte Weise erreicht werden, dass der mindestens eine Harzkanalbildungsfaden keine unerwünschten Trennmittelrückstände in einem durch den mindestens einen Harzkanalbildungsfaden ausgebildeten Harzkanal hinterlässt.

Der mindestens eine Harzkanalbildungsfaden ist vorzugsweise mit den Kettfäden und/oder den Schussfäden des Abreißgewebes verbunden. Der mindestens eine Harzkanalbildungsfaden kann beispielsweise zumindest abschnittsweise mit den Kettfäden und/oder den Schussfäden des Abreißgewebes verwebt sein. Der mindestens eine Harzkanalbildungsfaden ist vorzugsweise dazu ausgebildet, einen Harzkanal in einem pultrudierten Faserverbundstreifen zu erzeugen.

Ein Vorteil eines solchen Harzkanalbildungsfadens besteht darin, dass aufgrund des größeren Durchmessers des Harzkanalbildungsfadens nach Abziehen des Abreißgewebes ein durch den Harzkanalbildungsfaden gebildeter Harzkanal im Bauteil ausgebildet wird. Ein solcher Harzkanal bietet insbesondere in einem Harzinfusionsverfahren den Vorteil, dass Harz entlang des Harzkanals bewegt werden kann, sodass eine gute Fließfähigkeit des Harzes erreicht wird. Dadurch kann sichergestellt werden, dass Harz an die Orte gelangt, an denen es vorgesehen ist.

Ein weiterer Vorteil besteht darin, dass das Harzinfusionsverfahren beschleunigt werden kann, da mittels des durch den Harzkanalbildungsfaden gebildeten Harzkanals das Harz ohne Hindernisse bewegt werden kann.

Ein weiterer Vorteil besteht darin, dass bei einem Infusionsprozess, wenn nebeneinander angeordnete pultrudierte Faserverbundstreifen vorgesehen sind, auf Zwischenlagen zwischen diesen pultrudierten Faserverbundstreifen verzichtet werden kann. Denn da durch den Harzkanal bereits eine ausreichende Fließfähigkeit erreicht werden kann, sind keine weiteren Fließhilfen zwingend erforderlich. Dadurch können auch die mechanischen Eigenschaften des Bauteils verbessert werden, da harzreiche Bereiche, die die mechanischen Eigenschaften des fertigen Bauteils negativ beeinflussen könnten, verringert oder sogar ganz vermieden werden können.

Ein weiterer Vorteil besteht darin, dass mittels eines solchen Abreißgewebes Harzkanäle in ein Bauteil eingebracht werden können, ohne dass dabei die Fasern des Bauteils beschädigt werden. Würde man beispielsweise Harzkanäle in das Bauteil fräsen, so würde man die Fasern im Faserverbundbauteil durchtrennen und dadurch die mechanischen Eigenschaften des Bauteils verringern. Eine solche Verringerung der mechanischen Eigenschaften kann durch die Erfindung auf besonders vorteilhafte Weise verhindert werden.

Es ist besonders bevorzugt, dass der mindestens eine Harzkanalbildungsfaden schräg, vorzugsweise in einem Winkel zwischen 10° und 80°, besonders bevorzugt in einem Winkel zwischen 20° und 70°, zu den Kettfäden ausgerichtet ist.

Es ist besonders bevorzugt, dass der mindestens eine Harzkanalbildungsfaden schräg, vorzugsweise in einem Winkel zwischen 10° und 80°, besonders bevorzugt in einem Winkel zwischen 20° und 70°, zu den Schussfäden ausgerichtet ist.

Ein Vorteil einer solchen schrägen Anordnung des mindestens einen Harzkanalbildungsfadens besteht darin, dass bei einem Anbringen des Abreißgewebes auf einem länglichen Bauteil, wie einem pultrudierten Faserverbundstreifen, bei dem die Kettfäden oder die Schussfäden des Abreißgewebes in Längsrichtung des länglichen Bauteils verlaufen, der mindestens eine Harzkanalbildungsfaden mindestens einen Harzkanal erzeugen kann, der schräg zur Längsrichtung des länglichen Bauteils verläuft. Dadurch kann auf besonders vorteilhafte Weise erreicht werden, dass das Harz in einem Infusionsverfahren nicht nur in Längsrichtung des länglichen Bauteils bewegt wird, sondern auch quer dazu, wodurch eine besonders gute Verteilung des Harzes erreicht werden kann.

Es ist besonders bevorzugt, dass das Abreißgewebe mehrere Harzkanalbildungsfäden aufweist, die vorzugsweise rautenförmig angeordnet sind.

Unter einer rautenförmigen Anordnung ist insbesondere eine Anordnung in Form eines ebenen Vierecks mit vier gleich langen Seiten zu verstehen, wobei gegenüberliegende Seiten parallel und gegenüberliegende Winkel gleich groß sind.

Vorzugsweise sind die Harzkanalbildungsfäden in Form einer spitzwinkligen Raute angeordnet.

Ein Vorteil einer solchen rautenförmigen Anordnung besteht darin, dass das Harz entlang der durch die Harzkanalbildungsfäden entstehenden Harzkanäle besonders gut über die Bauteiloberfläche verteilt werden kann.

Es ist besonders bevorzugt, dass der mindestens eine Harzkanalbildungsfaden Kunststoff, vorzugsweise Polyamid, umfasst oder daraus besteht, wobei vorzugsweise die Kettfäden und die Schussfäden jeweils Kunststoff, vorzugsweise Polyamid, umfassen oder daraus bestehen.

Das Vorsehen von Kunststoff, und insbesondere Polyamid, hat den Vorteil, dass das Abreißgewebe besonders leicht und damit gut verarbeitbar ist und es sich gut vom Bauteil ablösen lässt, da es sich nicht untrennbar mit dem Harz verbindet. Ein weiterer Vorteil liegt darin, dass ein solches Abreißgewebe kostengünstig herstellbar ist.

Es ist besonders bevorzugt, dass der Harzkanalbildungsfadendurchmesser mindestens 0,5 mm beträgt, vorzugsweise mindestens 0,7 mm beträgt, besonders bevorzugt mindestens 1 mm beträgt.

Bei einem solchen Mindest-Harzkanalbildungsfadendurchmesser können Harzkanäle im Bauteil gebildet werden, die eine ausreichende Größe aufweisen, um Harz entlang der Harzkanäle in einem Infusionsverfahren zu führen und somit das Harz auf besonders vorteilhafte Weise zu verteilen. Bei einem geringeren Harzkanalbildungsfadendurchmesser ist die Fließfähigkeit des Harzes hingegen deutlich schlechter und das Harz kann nicht so gut wie bei Verwendung eines solchen Mindestdurchmessers durch die Harzkanäle fließen.

Es ist besonders bevorzugt, dass der Harzkanalbildungsfadendurchmesser höchstens 5 mm beträgt, vorzugsweise höchstens 4 mm beträgt, besonders bevorzugt höchstens 3 mm beträgt.

Bei einem solchen Maximal-Harzkanalbildungsfadendurchmesser können Harzkanäle im Bauteil gebildet werden, die nicht zu groß sind, sodass das Harz in einer vorteilhaften Geschwindigkeit entlang der Harzkanäle in einem Infusionsverfahren geführt werden kann und somit das Harz auf besonders vorteilhafte Weise verteilt werden kann. Bei einem größeren Harzkanalbildungsfadendurchmesser kann die Fließfähigkeit des Harzes hingegen so hoch sein, dass das Harz gegebenenfalls zu schnell durch die Kanäle fließt. Außerdem kann es bei einem zu großen Harzkanalbildungsfadendurchmesser zu einer unerwünschten mechanischen Schwächung des Bauteils kommen, in das die mindestens eine Harzkanalbildungsfaser eingedrückt wird.

Der Kettfadendurchmesser beträgt vorzugsweise mindestens 0,1 mm, besonders bevorzugt mindestens 0,2 mm, insbesondere mindestens 0,3 mm. Der Kettfadendurchmesser beträgt vorzugsweise höchstens 1,2 mm, besonders bevorzugt höchstens 1,1 mm, insbesondere höchstens 1 mm. Der Kettfadendurchmesser kann beispielsweise 0,5 mm betragen.

Der Schussfadendurchmesser beträgt vorzugsweise mindestens 0,1 mm, besonders bevorzugt mindestens 0,2 mm, insbesondere mindestens 0,3 mm. Der Schussfadendurchmesser beträgt vorzugsweise höchstens 1,2 mm, besonders bevorzugt höchstens 1,1 mm, insbesondere höchstens 1 mm. Der Schussfadendurchmesser kann beispielsweise 0,5 mm betragen.

Besonders bevorzugt ist die Verwendung eines wie hier beschriebenen Abreißgewebes, das an einer Außenoberfläche eines pultrudierten Faserverbundstreifen angebracht wird, wobei das Abreißgewebe vorzugsweise während der Herstellung des pultrudierten Faserverbundstreifens auf der Außenoberfläche des pultrudierten Faserverbundsteifen aufgebracht wird, wobei das Abreißgewebe an dem pultrudierten Faserverbundstreifen anliegt und von dem pultrudierten Faserverbundstreifen abreißbar ist.

Gemäß einem weiteren Aspekt wird die eingangs genannte Aufgabe gelöst durch ein Verfahren zum Herstellen eines pultrudierten Faserverbundstreifens, das Verfahren umfassend: Zusammenführen von Fasern und flüssigem Harzes in einem Pultrusionsverfahren zu einem pultrudierten Faserverbundstreifen, wobei beim Pultrusionsverfahren ein Abreißgewebe auf die Oberfläche des Faserverbundstreifens aufgebracht wird, wobei das Abreißgewebe Kettfäden mit einem Kettfadendurchmesser und Schussfäden mit einem Schussfadendurchmesser aufweist, wobei das Abreißgewebe ferner mindestens einen Harzkanalbildungsfaden mit einem Harzkanalbildungsfadendurchmesser aufweist, der größer, vorzugsweise um ein Vielfaches größer, ist als der Kettfadendurchmesser und der größer, vorzugsweise um ein Vielfaches größer, ist als der Schussfadendurchmesser.

Die Fasern werden vorzugsweise in Form von Rovings, also Faserbündeln, und/oder Fasergelegen und/oder Fasergeweben bereitgestellt. Vorzugsweise sind die Fasern Kohlenstofffasern und/oder Glasfasern und/oder andere technische Fasern, die für Faserverbundwerkstoffe geeignet sind. Das Harz ist vorzugsweise ein Harz eines duroplastischen Kunststoffs, insbesondere ein Epoxidharz und/oder ein Polyesterharz.

Es ist besonders bevorzugt, dass das Abreißgewebe derart auf die Oberfläche des Faserverbundstreifens aufgebracht wird, dass der mindestens eine Harzkanalbildungsfaden derart in das noch nicht ausgehärtete Harz eingedrückt wird, dass der mindestens eine Harzkanalbildungsfaden mindestens einen Harzkanal in dem Faserverbundstreifen erzeugt.

Das Abreißgewebe wird also vorzugsweise vor einer überwiegenden oder vollständigen Aushärtung des Harzes auf die Oberfläche des Faserverbundstreifens aufgebracht, sodass der mindestens eine Harzkanalbildungsfaden in das noch formbare Harz eingedrückt werden kann.

Ein Vorteil eines solchen Vorgehens besteht darin, dass der mindestens eine Harzkanalbildungsfaden in das noch nicht überwiegend oder noch nicht vollständig ausgehärtete Harz einfach, insbesondere während des Pultrusionsverfahrens, eingedrückt werden kann, wodurch in dem Faserverbundstreifen ein Harzkanal erzeugt werden kann und sich die Fasern an dieser Stelle besonders gut um den gebildeten Harzkanal herum anordnen können.

Es ist besonders bevorzugt, dass das Verfahren umfasst: Aushärten des Faserverbundstreifens, vorzugsweise während des Pultrusionsverfahrens, wobei während des Aushärtens das Abreißgewebe auf der Oberfläche des Faserverbundstreifens angeordnet ist.

Vorzugsweise wird der Faserverbundstreifen während des Pultrusionsverfahrens vollständig ausgehärtet. Auf diese Weise kann im Pultrusionsverfahren ein vollständig ausgehärteter, und damit fertig hergestellter, Faserverbundstreifen erzeugt werden, der dann ohne weitere Aushärtung in einem nächsten Schritt, wie einem Infusionsverfahren zur Herstellung eines Gurts, verwendet werden kann. Es ist allerdings alternativ auch denkbar, dass der Faserverbundstreifen zunächst nicht vollständig ausgehärtet wird. Das kann insbesondere dann vorteilhaft sein, wenn im weiteren Verfahren der Faserverbundstreifen flexibel sein soll und beispielsweise an eine gekrümmte Form angedrückt werden soll, und erst anschließend eine vollständige Aushärtung stattfinden soll.

Es ist besonders bevorzugt, dass das Verfahren umfasst: Abziehen des Abreißgewebes nach dem Aushärten des Faserverbundstreifens von der Oberfläche des Faserverbundstreifens, wobei der Faserverbundstreifen nach dem Abziehen des Abreißgewebes mindestens einen Harzkanal, vorzugsweise mehrere Harzkanäle, aufweist, der durch den mindestens einen Harzkanalbildungsfaden, vorzugsweise durch mehrere Harzkanalbildungsfäden, gebildet wurde.

Das Abziehen des Abreißgewebes, das auch als Abreißen des Abreißgewebes bezeichnet werden kann, erfolgt vorzugsweise per Hand durch eine Person oder durch eine maschinelle Hilfsvorrichtung zum Abziehen des Abreißgewebes.

Es ist besonders bevorzugt, dass das Abreißgewebe ein Abreißgewebe wie hierin beschrieben ist.

Gemäß einem weiteren Aspekt wird die eingangs genannte Aufgabe gelöst durch einen pultrudierten Faserverbundstreifen, der eine Oberfläche aufweist, die mittels Abreißen eines Abreißgewebes, insbesondere eines wie hier beschriebenen Abreißgewebes, erzeugt wurde, wobei der Faserverbundstreifen mindestens einen Harzkanal, vorzugsweise mehrere Harzkanäle, aufweist, der sich entlang der Oberfläche des Faserverbundstreifens erstreckt und vorzugsweise einen kreissegmentförmigen Querschnitt aufweist.

Der mindestens eine Harzkanal weist vorzugsweise einen kreissegmentförmigen Querschnitt auf, wobei der kreissegmentförmige Querschnitt einen Mittelpunktswinkel von vorzugsweise weniger als 180°, besonders bevorzugt höchstens 170°, insbesondere höchstens 160°, aufweist. Ein Vorteil eines solchen kreissegmentförmigen Querschnitts besteht darin, dass das Abreißgewebe besonders gut von dem Faserverbundstreifen abgezogen werden kann. Bei einem kreissegmentförmigen Querschnitt mit einem Mittelpunktswinkel von 180° oder sogar mehr als 180° ist sowohl das Abziehen des Abreißgewebes als auch das Ausbilden eines Harzkanals gar nicht mehr in einfach bzw. in guter Qualität möglich oder aber deutlich erschwert.

Es ist besonders bevorzugt, dass der mindestens eine Harzkanal eine Breite von mindestens 0,5 mm, vorzugsweise mindestens 0,7 mm, besonders bevorzugt mindestens 1 mm, aufweist.

Es ist besonders bevorzugt, dass der mindestens eine Harzkanal eine Breite von höchstens 5 mm, vorzugsweise höchstens 4 mm, besonders bevorzugt höchstens 3 mm, aufweist.

Es ist besonders bevorzugt, dass der mindestens eine Harzkanal eine Tiefe von mindestens 0,2 mm, vorzugsweise mindestens 0,3 mm, besonders bevorzugt mindestens 0,4 mm, aufweist.

Ein Vorteil einer solchen Mindesttiefe des mindestens einen Harzkanals besteht darin, dass der mindestens eine Harzkanal eine ausreichende Tiefe aufweist, um Harz in einem Infusionsverfahren in vorteilhafter Weise und in ausreichender Geschwindigkeit zwischen nebeneinander angeordneten Faserverbundstreifen zu transportieren.

Es ist besonders bevorzugt, dass der mindestens eine Harzkanal eine Tiefe von höchstens 2,5 mm, vorzugsweise höchstens 2 mm, besonders bevorzugt höchstens 1,5 mm, aufweist.

Ein Vorteil einer solchen Maximal-Tiefe des mindestens einen Harzkanals besteht darin, dass der mindestens eine Harzkanal bei einer solchen Maximaltiefe keine größeren negativen Einflüsse auf die mechanischen Eigenschaften des Faserverbundstreifens hat, da die Fasern nicht zu stark um den mindestens einen Harzkanal herum gebogen werden müssen.

Es ist besonders bevorzugt, dass der Faserverbundstreifen Kohlenstoffasern umfasst und/oder die Kohlenstofffasern unidirektional ausgerichtet sind, wobei vorzugsweise alle Kohlenstofffasern des Faserverbundstreifens parallel zur Längsrichtung des Faserverbundstreifens ausgerichtet sind.

Vorzugsweise sind alle Faser des Faserverbundstreifens Kohlenstofffasern. Es ist aber auch möglich, dass beispielsweise Kohlenstofffasern und andere Fasern, wie Glasfasern, als Fasern verwendet werden. Kohlenstofffasern sind aufgrund der besonders guten mechanischen Eigenschaften, wie der relativ hohen spezifischen Festigkeit und der relativ hohen spezifischen Steifigkeit, bevorzugt.

Unter einer unidirektionalen Ausrichtung ist insbesondere eine Ausrichtung zu verstehen, bei der alle Fasern in einer Richtung, also parallel zueinander, orientiert sind.

Ein Vorteil einer solchen unidirektionalen Anordnung der Fasern besteht darin, dass dadurch eine besonders hohe spezifische Festigkeit und eine besonders hohe spezifische Steifigkeit in Längsrichtung sowie eine besonders hohe Biegesteifigkeit erreicht werden können.

Es ist besonders bevorzugt, dass der pultrudierte Faserverbundstreifen erhalten ist durch ein wie hier beschriebenes Verfahren.

Es ist besonders bevorzugt, dass der Faserverbundstreifen auf zumindest zwei gegenüberliegenden Oberflächen jeweils mindestens einen Harzkanal aufweist, vorzugsweise jeweils mehrere Harzkanäle aufweist.

Ein Vorteil hiervon besteht darin, dass beidseitig entlang des Faserverbundstreifens Harz in einem Infusionsverfahren transportiert werden kann. Dadurch kann eine gleichmäßige Verteilung des Harzes in einem Infusionsprozess erreicht werden und es wird sichergestellt, dass Harz auf beiden Seiten des Faserverbundstreifens verteilt werden kann.

Vorzugsweise weist der Faserverbundstreifen entlang seines Umfangs mehrere Harzkanäle auf.

Ein Vorteil solcher mehrerer entlang des Umfangs angeordneter Harzkanäle besteht darin, dass Harz in einem Infusionsverfahren entlang des gesamten Umfangs des Faserverbundstreifens transportiert werden kann. Dadurch kann eine besonders gleichmäßige Verteilung des Harzes in einem Infusionsprozess erreicht werden.

Gemäß einem weiteren Aspekt wird die eingangs genannte Aufgabe gelöst durch einen Gurt, insbesondere für ein Rotorblatt einer Windenergieanlage, der Gurt umfassend mehrere wie hier beschriebene pultrudierte Faserverbundstreifen, die jeweils eine Längsrichtung aufweisen, wobei die Längsrichtungen der Faserverbundstreifen parallel zueinander ausgerichtet sind, wobei die Faserverbundstreifen vorzugsweise jeweils einen rechteckigen Querschnitt aufweisen, wobei vorzugsweise keine Gewebelagen und/oder Gelegelagen zwischen benachbart angeordneten Faserverbundstreifen vorhanden sind.

Die mehreren Faserverbundsteifen liegen vorzugsweise direkt aneinander an, ohne dass Gewebelagen und/oder Gelegelagen zur Fließförderung zwischen den Faserverbundstreifen angeordnet sind. Denn durch die Harzkanäle sind keine Gewebelagen und/oder Gelegelagen zur Fließförderung zwischen den Faserverbundsteifen erforderlich. Auf diese Weise kann erstens Material eingespart werden, da keine solchen Gewebematerialien und/oder Gelegematerialien benötigt werden. Zweitens können auf besonders vorteilhafte Weise harzreiche Bereiche zwischen den Faserverbundstreifen reduziert oder sogar ganz vermieden werden, wodurch, wie oben bereits beschrieben, bessere mechanische Eigenschaften des Gurts erreicht werden können.

Gemäß einem weiteren Aspekt wird die eingangs genannte Aufgabe gelöst durch ein Rotorblatt für eine Windenergieanlage, das Rotorblatt umfassend Rotorblattschalen, die jeweils eine Rotorblattschaleninnenseite und einer Rotorblattschalenaußenseite aufweisen, einen ersten Gurt, vorzugsweise einen wie hier beschriebenen Gurt, umfassend eine Gurtaußenseite des ersten Gurts und eine Gurtinnenseite des ersten Gurts, wobei die Gurtaußenseite des ersten Gurts mit einer der Rotorblattschaleninnenseiten, vorzugsweise mittels einer Klebeverbindung, verbunden ist, einen zweiten Gurt, vorzugsweise einen wie hier beschriebenen Gurt, umfassend eine Gurtaußenseite des zweiten Gurts und eine Gurtinnenseite des zweiten Gurts, wobei die Gurtaußenseite des zweiten Gurts mit einer der Rotorblattschaleninnenseiten, vorzugsweise mit einer anderen der Rotorblattschaleninnenseiten vorzugsweise mittels einer Klebeverbindung, verbunden ist, und vorzugsweise mindestens einen Steg, umfassend einen ersten Verbindungsabschnitt und einen zweiten Verbindungsabschnitt, wobei der erste Verbindungsabschnitt des Stegs mit der Gurtinnenseite des ersten Gurts verbunden ist und der zweite Verbindungsabschnitt des Stegs mit der Gurtinnenseite des zweiten Gurts verbunden ist.

Unter einer Klebeverbindung ist in diesem Zusammenhang insbesondere eine Verbindung zu verstehen, die mittels Aufbringen eines Klebstoffs erzeugt wurde und/oder die mittels einer Harzinfusion erzeugt wurde.

Die Verbindung zwischen der Gurtaußenseite des ersten Gurts und einer der Rotorblattschaleninnenseiten ist vorzugsweise eine stoffschlüssige Verbindung, die durch eine Harzinfusion erzeugt wurde.

Die Verbindung zwischen der Gurtaußenseite des zweiten Gurts und einer der Rotorblattschaleninnenseiten ist vorzugsweise eine stoffschlüssige Verbindung, die durch eine Harzinfusion erzeugt wurde.

Gemäß einem weiteren Aspekt wird die eingangs genannte Aufgabe gelöst durch eine Windenergieanlage, umfassend mindestens ein wie hier beschriebenes Rotorblatt, vorzugsweise drei wie hier beschriebene Rotorblätter.

Zu den Vorteilen, Ausführungsvarianten und Ausführungsdetails der verschiedenen Aspekte der hier beschriebenen Lösungen und ihrer jeweiligen möglichen Fortbildungen wird auch auf die Beschreibung zu den entsprechenden Merkmalen, Details und Vorteilen der jeweils anderen Aspekte und ihrer Fortbildungen verwiesen.

Bevorzugte Ausführungsbeispiele werden beispielhaft anhand der beiliegenden Figuren erläutert. Die Zeichnungen sind nicht unbedingt maßstabsgetreu. In den Figuren sind gleiche oder im Wesentlichen funktionsgleiche bzw. -ähnliche Elemente mit den gleichen Bezugszeichen bezeichnet. Es zeigen:
- Fig. 1:: eine schematische Darstellung einer Windenergieanlage;
- Fig. 2A, 2B:: einen schematischen Querschnitt und einen schematischen Längsschnitt eines Rotorblattes;
- Fig. 3a:: einen schematischen Aufbau eines Abreißgewebes mit Harzkanalbildungsfäden;
- Fig. 3b:: einen Querschnitt eines pultrudierten Faserverbundstreifens mit Harzkanälen;
- Fig. 4a:: einen Querschnitt eines Gurtes für ein Rotorblatt einer Windenergieanlage;
- Fig. 4b:: einen Querschnitt eines Gurtes für ein Rotorblatt einer Windenergieanlage;
- Fig. 5:: einen schematischen Querschnitt eines Rotorblatts mit zwei Gurten;
- Fig. 6:: ein Flussdiagramm eines Verfahrens zum Herstellen eines pultrudierten Faserverbundstreifens.

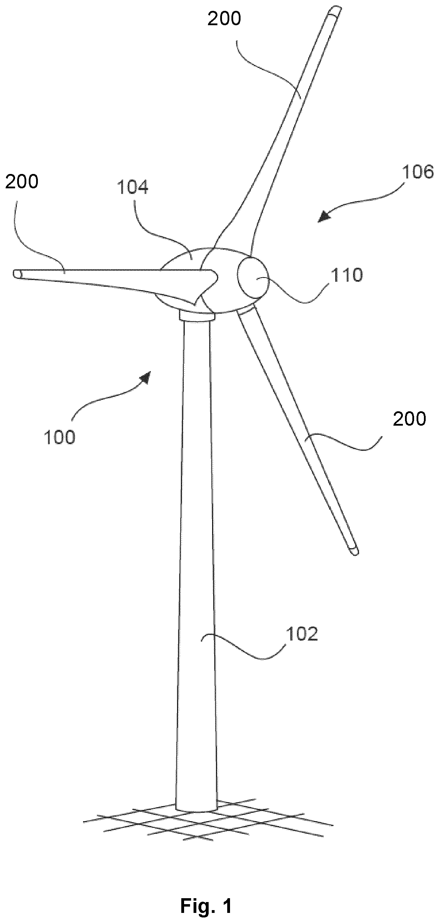

Fig. 1 zeigt eine schematische Darstellung einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

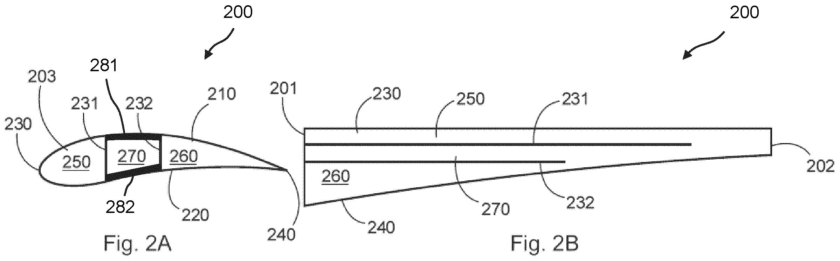

Fig. 2A zeigt einen Querschnitt eines Rotorblattes 200 und Fig. 2B zeigt einen Längsschnitt eines Rotorblattes 200. Das Rotorblatt 200 weist zwei Rotorblattschalen 210, 220 auf, welche ein Innenvolumen 203 umgeben. Das Rotorblatt 200 weist ferner eine Rotorblattvorderkante 230 und eine Rotorblatthinterkante 240 auf. Zwischen den Rotorblattschalen 210, 220 sind Stege 231, 232 vorgesehen, so dass das Innenvolumen 203 in verschiedene Abschnitte oder Kanäle 250, 260 und 270 (erster Kanal 250 zwischen Vorderkante 230 und erstem Steg 231, zweiter Kanal 260 zwischen Hinterkante 240 und zweitem Steg 232 und dritter Kanal 270 zwischen erstem und zweitem Steg 231, 232) aufgeteilt werden kann. Der Steg 231 kann beispielsweise länger sein als der Steg 232.

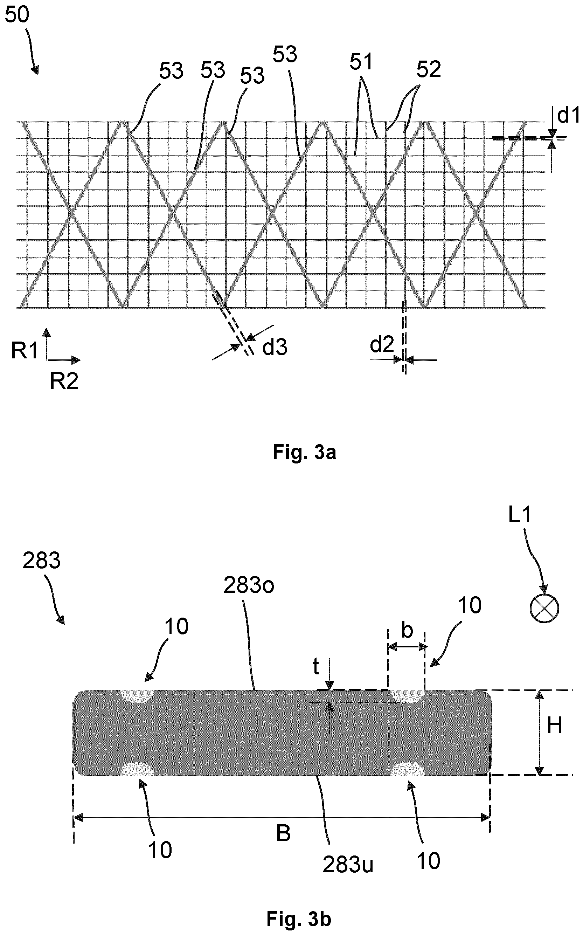

Fig. 3a zeigt einen schematischen Aufbau eines Abreißgewebes 50 mit Harzkanalbildungsfäden 53. Das Abreißgewebe 50 dient dem Erzeugen einer Oberflächenstruktur eines pultrudierten Faserverbundstreifens. Das Abreißgewebe 50 weist Kettfäden 51 mit einem Kettfadendurchmesser d1 und Schussfäden 52 mit einem Schussfadendurchmesser d2 auf. Die Kettfäden 51 sind in Richtung R2 angeordnet. Die Schussfäden 52 sind orthogonal zu den Kettfäden 51, nämlich in Richtung R1, angeordnet. Der Harzkanalbildungsfäden wesen jeweils einen Harzkanalbildungsfadendurchmesser d3 auf, der größer, vorzugsweise um ein Vielfaches größer, ist als der Kettfadendurchmesser d1 und größer, vorzugsweise um ein Vielfaches größer, als der Schussfadendurchmesser d2. Kettfadendurchmesser d1 und Schussfadendurchmesser d2 sind gleich groß.

Die Harzkanalbildungsfäden sind schräg, in einem Winkel von ca. 60° zu den Kettfäden 51 und einem Winkel von ca. 30° zu den Schussfäden 52 ausgerichtet. Die Harzkanalbildungsfäden 53 sind dabei rautenförmig angeordnet. Sowohl die Harzkanalbildungsfäden 53 als auch die Kettfäden 51 und die Schussfäden 52 bestehen aus Polyamid.

Fig. 3b zeigt einen Querschnitt eines pultrudierten Faserverbundstreifens 283 mit Harzkanälen 10. Der pultrudierte Faserverbundstreifen 283 wurde im Pultrusionsverfahren hergestellt. Die Längsrichtung L1 des pultrudierten Faserverbundstreifens 283 entspricht der Richtung, in der der Faserverbundstreifen 283 im Pultrusionsverfahren gezogen wurde. Der Faserverbundstreifen 283 weist Kohlenstofffasern (nicht einzeln dargestellt) auf, die unidirektional und parallel zur Längsrichtung L1 angeordnet sind. Das Faserverbundstreifen 283 weist außerdem einen Kunststoff, beispielsweise ein Epoxidharz, als Matrix auf. Der Faserverbundstreifen 283 hat zwei gegenüberliegende Oberflächen 283o, 283u, die mittels Abreißen eines wie im Zusammenhang mit Fig. 3a beschriebenen Abreißgewebes erzeugt wurden. Die Harzkanäle 10 erstrecken sich entlang der Oberflächen 283o, 283u des Faserverbundstreifens 283. Sie weisen jeweils einen kreissegmentförmigen Querschnitt auf. Der Faserverbundstreifen 283 hat eine Höhe H und eine Breite B. Die Breite B ist um ein Vielfaches größer als die Höhe H. Die Harzkanäle 10 weisen kreissegmentförmige Querschnitte auf, die einen Mittelpunktswinkel von unter 180° und eine Tiefe t von 1 mm sowie eine Breite b von 1,5 mm aufweisen.

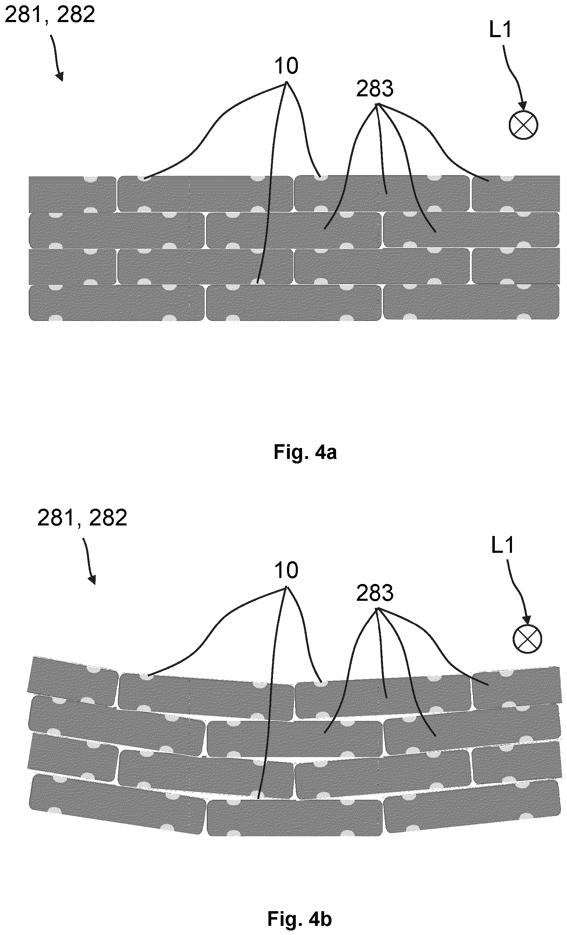

Fig. 4a zeigt einen Querschnitt eines Gurtes 281, 282 für ein Rotorblatt einer Windenergieanlage. Der Gurt 281, 282 weist mehrere parallel angeordnete pultrudierte Faserverbundstreifen 283 auf, die wie im Zusammenhang mit Fig. 3 beschrieben ausgebildet sein können und die sich entlang ihrer Längserstreckung L1 erstrecken. Der Gurt 281, 282 erstreckt sich ebenfalls entlang der Richtung der Längserstreckung L1. Die Längserstreckung der Faserverbundstreifen 283 entspricht also der Längserstreckung des Gurtes 281, 282. Die Faserverbundstreifen 283 weisen Harzkanäle 10 auf.

Fig. 4b zeigt einen Querschnitt eines Gurtes 281, 282 für ein Rotorblatt einer Windenergieanlage. Der Gurt 281 , 282 ist wie der in Fig. 4a gezeigte Gurt ausgebildet, mit dem Unterschied, dass der in Fig. 4b gezeigte Gurt eine im Querschnitt gekrümmte Form aufweist, die der Rotorblattschale, mit der der Gurt 281, 282 verbunden werden soll, angepasst ist.

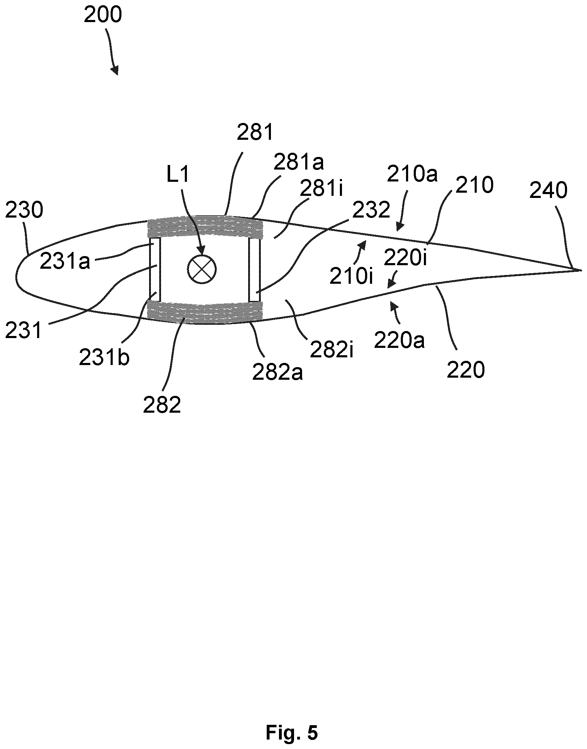

Fig. 5 zeigt einen schematischen Querschnitt eines Rotorblatts 200 mit zwei Gurten 281, 282. Das Rotorblatt 200 weist zwei Rotorblattschalen 210, 220 auf. Das Rotorblatt 200 weist ferner eine Rotorblattvorderkante 230 und eine Rotorblatthinterkante 240 auf. Zwischen den Rotorblattschalen 210, 220 sind Stege 231, 232 vorgesehen. Die Gurte 281, 282 des Rotorblatts 200 weisen jeweils eine Gurtaußenseite 281a, 282a auf, die mit den Rotorblattschalen 210, 220 verbunden sind. Die Gurtaußenseiten 281a, 282a weisen jeweils eine quer zur Längsrichtung L1 des jeweiligen Gurts 281, 282 gewölbt ausgebildete Außenoberfläche auf. Die Gurtinnenseiten 281i, 282i der Gurte 281, 282 sind mit den Stegen 231, 232 verbunden.

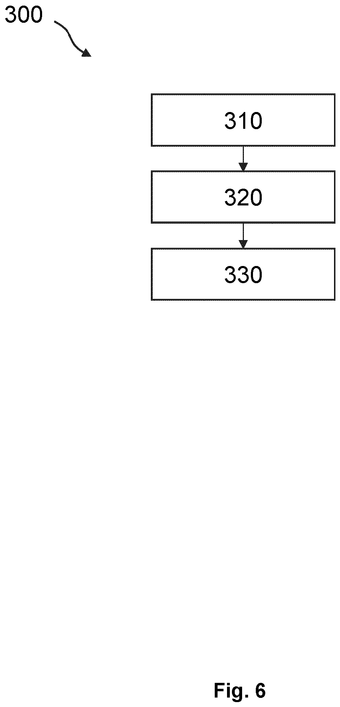

Fig. 6 zeigt ein Flussdiagramm eines Verfahrens 300 zum Herstellen eines pultrudierten Faserverbundstreifens 283. Das Verfahren umfasst folgende Schritte:
In einem Schritt 310, Zusammenführen von Fasern und flüssigem Harzes in einem Pultrusionsverfahren zu einem pultrudierten Faserverbundstreifen 283, wobei beim Pultrusionsverfahren ein Abreißgewebe 50 auf die Oberfläche 283o des Faserverbundstreifens 283 aufgebracht wird, wobei das Abreißgewebe 50 Kettfäden 51 mit einem Kettfadendurchmesser d1 und Schussfäden 52 mit einem Schussfadendurchmesser d2 aufweist, wobei das Abreißgewebe 50 ferner mindestens einen Harzkanalbildungsfaden 53 mit einem Harzkanalbildungsfadendurchmesser d3 aufweist, der größer, vorzugsweise um ein Vielfaches größer, ist als der Kettfadendurchmesser d1 und der größer, vorzugsweise um ein Vielfaches größer, ist als der Schussfadendurchmesser d2. Das Abreißgewebe 50 wird dabei derart auf die Oberfläche 283o des Faserverbundstreifens 283 aufgebracht, dass der mindestens eine Harzkanalbildungsfaden 53 derart in das noch nicht ausgehärtete Harz eingedrückt wird, dass der mindestens eine Harzkanalbildungsfaden 53 mindestens einen Harzkanal in dem Faserverbundstreifen erzeugt. Das Abreißgewebe ist dabei vorzugsweise wie im Zusammenhang mit Fig. 3 beschrieben ausgebildet.

In einem Schritt 320, Aushärten des Faserverbundstreifens 283, vorzugsweise während des Pultrusionsverfahrens, wobei während des Aushärtens das Abreißgewebe auf der Oberfläche des Faserverbundstreifens angeordnet ist.

In einem Schritt 330, Abziehen des Abreißgewebes nach dem Aushärten des Faserverbundstreifens von der Oberfläche des Faserverbundstreifens, wobei der Faserverbundstreifen nach dem Abziehen des Abreißgewebes mindestens einen Harzkanal, vorzugsweise mehrere Harzkanäle, aufweist, der durch den mindestens einen Harzkanalbildungsfaden, vorzugsweise durch mehrere Harzkanalbildungsfäden, gebildet wurde.

### Bezugszeichenliste

- 10: Harzkanal
- 50: Abreißgewebe
- 51: Kettfäden des Abreißgewebes
- 52: Schussfäden des Abreißgewebes
- 53: Harzkanalbildungsfaden des Abreißgewebes
- 100: Windenergieanlage
- 102: Turm der Windenergieanlage
- 104: Gondel der Windenergieanlage
- 106: Rotor der Windenergieanlage
- 110: Spinner der Windenergieanlage
- 200: Rotorblatt der Windenergieanlage
- 203: Innenvolumen des Rotorblatts
- 210, 220: Rotorblattschalen
- 230: Rotorblattvorderkante
- 231, 232: Stege des Rotorblatts
- 240: Rotorblatthinterkante
- 250, 260, 270: Kanäle des Rotorblatts
- 281, 282: Gurt
- 281a, 282a: Gurtaußenseite
- 281i, 282i: Gurtinnenseite
- 283: pultrudierter Faserverbundstreifen
- 283o, 283u: Oberflächen des pultrudierten Faserverbundstreifens
- 300: Verfahren zum Herstellen eines pultrudierten Faserverbundstreifens
- 310, 320, 330: Verfahrensschritte
- B: Breite des pultrudierten Faserverbundstreifens
- b: Breite des Harzkanals
- d1: Kettfadendurchmesser
- d2: Schussfadendurchmesser
- d3: Harzkanalbildungsfadendurchmesser
- H: Höhe des pultrudierten Faserverbundstreifens
- R1: Richtung der Schussfäden
- R2: Richtung der Kettfäden
- t: Tiefe des Harzkanals

## Patentansprüche

1. Abreißgewebe (50), insbesondere zum Erzeugen einer Oberflächenstruktur eines pultrudierten Faserverbundstreifens (283), wobei das Abreißgewebe (50) Kettfäden (51) mit einem Kettfadendurchmesser (d1) und Schussfäden (52) mit einem Schussfadendurchmesser (d2) aufweist, **dadurch gekennzeichnet, dass** das Abreißgewebe (50) ferner mindestens einen Harzkanalbildungsfaden (53) mit einem Harzkanalbildungsfadendurchmesser (d3) aufweist, wobei der Harzkanalbildungsfadendurchmesser (d3) größer, vorzugsweise um ein Vielfaches größer, ist als der Kettfadendurchmesser (d1) und größer, vorzugsweise um ein Vielfaches größer, ist als der Schussfadendurchmesser (d2).

2. Abreißgewebe nach dem vorhergehenden Anspruch,
wobei der mindestens eine Harzkanalbildungsfaden schräg, vorzugsweise in einem Winkel zwischen 10° und 80°, besonders bevorzugt in einem Winkel zwischen 20° und 70°, zu den Kettfäden ausgerichtet ist, und/oder
wobei der mindestens eine Harzkanalbildungsfaden schräg, vorzugsweise in einem Winkel zwischen 10° und 80°, besonders bevorzugt in einem Winkel zwischen 20° und 70°, zu den Schussfäden ausgerichtet ist, und/oder
wobei die Kettfäden und Schussfäden orthogonal zueinander ausgerichtet sind.

3. Abreißgewebe nach einem der vorhergehenden Ansprüche,
wobei das Abreißgewebe (50) mehrere Harzkanalbildungsfäden (53) aufweist, die vorzugsweise rautenförmig angeordnet sind, und/oder
wobei der mindestens eine Harzkanalbildungsfaden (53) Kunststoff, vorzugsweise Polyamid, umfasst oder daraus besteht, wobei vorzugsweise die Kettfäden und die Schussfäden jeweils Kunststoff, vorzugsweise Polyamid, umfassen oder daraus bestehen.

4. Abreißgewebe nach einem der vorhergehenden Ansprüche,
wobei der Harzkanalbildungsfadendurchmesser (d3) mindestens 0,5 mm beträgt, vorzugsweise mindestens 0,7 mm beträgt, besonders bevorzugt mindestens 1 mm beträgt, und/oder
wobei der Harzkanalbildungsfadendurchmesser (d3) höchstens 5 mm beträgt, vorzugsweise höchstens 4 mm beträgt, besonders bevorzugt höchstens 3 mm beträgt.

5. Verfahren (300) zum Herstellen eines pultrudierten Faserverbundstreifens (283), das Verfahren umfassend:
- Zusammenführen (310) von Fasern und flüssigem Harzes in einem Pultrusionsverfahren zu einem pultrudierten Faserverbundstreifen (283), wobei beim Pultrusionsverfahren ein Abreißgewebe (50) auf die Oberfläche (283o) des Faserverbundstreifens (283) aufgebracht wird, wobei das Abreißgewebe (50) Kettfäden (51) mit einem Kettfadendurchmesser (d1) und Schussfäden (52) mit einem Schussfadendurchmesser (d2) aufweist, **dadurch gekennzeichnet, dass** das Abreißgewebe (50) ferner mindestens einen Harzkanalbildungsfaden (53) mit einem Harzkanalbildungsfadendurchmesser (d3) aufweist, der größer, vorzugsweise um ein Vielfaches größer, ist als der Kettfadendurchmesser (d1) und der größer, vorzugsweise um ein Vielfaches größer, ist als der Schussfadendurchmesser (d2).

6. Verfahren nach dem vorhergehenden Anspruch,
wobei das Abreißgewebe (50) derart auf die Oberfläche (283o) des Faserverbundstreifens (283) aufgebracht wird, dass der mindestens eine Harzkanalbildungsfaden (53) derart in das noch nicht ausgehärtete Harz eingedrückt wird, dass der mindestens eine Harzkanalbildungsfaden (53) mindestens einen Harzkanal in dem Faserverbundstreifen erzeugt.

7. Verfahren nach einem der vorhergehenden Ansprüche, das Verfahren umfassend:
- Aushärten (320) des Faserverbundstreifens (283), vorzugsweise während des Pultrusionsverfahrens, wobei während des Aushärtens das Abreißgewebe auf der Oberfläche des Faserverbundstreifens angeordnet ist, und/oder
- Abziehen (330) des Abreißgewebes nach dem Aushärten des Faserverbundstreifens von der Oberfläche des Faserverbundstreifens, wobei der Faserverbundstreifen nach dem Abziehen des Abreißgewebes mindestens einen Harzkanal, vorzugsweise mehrere Harzkanäle, aufweist, der durch den mindestens einen Harzkanalbildungsfaden, vorzugsweise durch mehrere Harzkanalbildungsfäden, gebildet wurde.

8. Verfahren nach einem der vorhergehenden Ansprüche,
wobei das Abreißgewebe (50) ein Abreißgewebe nach einem der Ansprüche 1-4 ist.

9. Pultrudierter Faserverbundstreifen (283), der eine Oberfläche (283o) aufweist, die mittels Abreißen eines Abreißgewebes (50), insbesondere eines Abreißgewebes (50) nach einem der Ansprüche 1-4, erzeugt wurde, wobei der Faserverbundstreifen (283) mindestens einen Harzkanal (10), vorzugsweise mehrere Harzkanäle (10), aufweist, der sich entlang der Oberfläche (283o) des Faserverbundstreifens (283) erstreckt und vorzugsweise einen kreissegmentförmigen Querschnitt aufweist.

10. Pultrudierter Faserverbundstreifen nach dem vorhergehenden Anspruch,
wobei der mindestens eine Harzkanal (10) eine Breite (b) von mindestens 0,5 mm, vorzugsweise mindestens 0,7 mm, besonders bevorzugt mindestens 1 mm, aufweist und/oder
wobei der mindestens eine Harzkanal eine Breite (b) von höchstens 5 mm, vorzugsweise höchstens 4 mm, besonders bevorzugt höchstens 3 mm, aufweist, und/oder
wobei der mindestens eine Harzkanal eine Tiefe (t) von mindestens 0,2 mm, vorzugsweise mindestens 0,3 mm, besonders bevorzugt mindestens 0,4, aufweist und/oder
wobei der mindestens eine Harzkanal eine Tiefe (t) von höchstens 2,5 mm, vorzugsweise höchstens 2 mm, besonders bevorzugt höchstens 1,5 mm, aufweist.

11. Pultrudierter Faserverbundstreifen nach einem der vorhergehenden Ansprüche, wobei der Faserverbundstreifen (283) Kohlenstoffasern umfasst und/oder die Kohlenstofffasern unidirektional ausgerichtet sind, wobei vorzugsweise alle Kohlenstofffasern des Faserverbundstreifens (283) parallel zur Längsrichtung (L1) des Faserverbundstreifens (283) ausgerichtet sind.

12. Pultrudierter Faserverbundstreifen, nach einem der vorhergehenden Ansprüche, erhalten durch ein Verfahren (300) nach einem der Ansprüche 5-8, und/oder wobei der Faserverbundstreifen (283) auf zumindest zwei gegenüberliegenden Oberflächen (283o, 283u) jeweils mindestens einen Harzkanal (10) aufweist, vorzugsweise jeweils mehrere Harzkanäle (10) aufweist.

13. Gurt (281, 282), insbesondere für ein Rotorblatt (200) einer Windenergieanlage (100), der Gurt (281, 282) umfassend
- mehrere pultrudierte Faserverbundstreifen (283) nach einem der Ansprüche 9-12, die jeweils eine Längsrichtung (L1) aufweisen, wobei die Längsrichtungen (L1) der Faserverbundstreifen (283) parallel zueinander ausgerichtet sind, wobei die Faserverbundstreifen (283) vorzugsweise jeweils einen rechteckigen Querschnitt aufweisen, wobei vorzugsweise keine Gewebelagen und/oder Gelegelagen zwischen benachbart angeordneten Faserverbundstreifen vorhanden sind.

14. Rotorblatt für eine Windenergieanlage (100), das Rotorblatt (200) umfassend
- Rotorblattschalen (210, 220), die jeweils eine Rotorblattschaleninnenseite (210i, 220i) und einer Rotorblattschalenaußenseite (210a, 220a) aufweisen,
- einen ersten Gurt (281), vorzugsweise einen Gurt nach dem vorhergehenden Anspruch, umfassend eine Gurtaußenseite (281a) des ersten Gurts (281) und eine Gurtinnenseite (281i) des ersten Gurts (281), wobei die Gurtaußenseite (281a) des ersten Gurts (281) mit einer der Rotorblattschaleninnenseiten (210i), vorzugsweise mittels einer Klebeverbindung, verbunden ist,
- einen zweiten Gurt (282), vorzugsweise einen Gurt nach dem vorhergehenden Anspruch, umfassend eine Gurtaußenseite (282a) des zweiten Gurts (282) und eine Gurtinnenseite (282i) des zweiten Gurts (282), wobei die Gurtaußenseite (282a) des zweiten Gurts (282) mit einer der Rotorblattschaleninnenseiten (220i), vorzugsweise mit einer anderen der Rotorblattschaleninnenseiten (220i) vorzugsweise mittels einer Klebeverbindung, verbunden ist,
- und vorzugsweise mindestens einen Steg (231, 232), umfassend einen ersten Verbindungsabschnitt (231a) und einen zweiten Verbindungsabschnitt (231b), wobei der erste Verbindungsabschnitt (231a) des Stegs (231, 232) mit der Gurtinnenseite (281i) des ersten Gurts (281) verbunden ist und der zweite Verbindungsabschnitt (231b) des Stegs (231, 232) mit der Gurtinnenseite (282i) des zweiten Gurts (282) verbunden ist.

15. Windenergieanlage (100), umfassend mindestens ein Rotorblatt (200) nach dem vorhergehenden Anspruch, vorzugsweise drei Rotorblätter (200) nach dem vorhergehenden Anspruch.
